# EUROPÄISCHE PATENTSCHRIFT

(11) **EP 3 135 380 B1**
(45) Veröffentlichungstag und Bekanntmachung des Hinweises auf die Patenterteilung: **11.10.2017**
(21) Anmeldenummer: 15020143.2
(22) Anmeldetag: 27.08.2015
(51) Int. Cl.: B02C 19/18, B29B 17/04, B02C 23/12, B02C 23/14, B02C 23/34, B02C 23/20, B02C 23/40

(54) **KRYOGENMAHLVORRICHTUNG UND -VERFAHREN**
CRYOGENIC GRINDING DEVICE AND METHOD
DISPOSITIF ET PROCÉDÉ DE BROYAGE CRYOGÉNIQUE

(43) Veröffentlichungstag der Anmeldung: 01.03.2017
(73) Patentinhaber: Fischer, Josef, 86399 Bobingen (DE)
(72) Erfinder: Fischer, Josef, 86399 Bobingen (DE)
(74) Vertreter: Munk, Ludwig

(56) Entgegenhaltungen:
- WO-A2-2005/049656
- US-A- 5 195 695

## Beschreibung

Die Erfindung betrifft eine Kryogenmahlvorrichtung gemäß dem Oberbegriff des Anspruchs 1, sowie ein Kryogenmahlverfahren gemäß dem Oberbegriff des Anspruchs 15.

Das kryogene Mahlen wird zum Zerkleinern von schwer zerkleinerbaren Materialien, wie z.B. zur Erzeugung von Gummimehl aus Gummigranulat verwendet. Dabei wird das zu zermahlende Grobgut einer Tieftemperaturversprödungseinrichtung, z.B. in Form einer Kühlschnecke, zugeführt, in der es mit einem flüssig zugeführten Gas, beispielsweise Flüssigstickstoff heruntergekühlt und versprödet wird, so dass es brüchig wird. Dann wird das Material auf eine Mühle aufgegeben und gemahlen. Das so gewonnene Mahlgut erhält allerdings viele Feinheitsfraktionen. Um eine bestimmte Fraktion, im Regelfall der Feinanteil des Mahlguts, zu erhalten, wird das Mahlgut dann getrocknet bzw. erwärmt und auf eine Siebvorrichtung aufgegeben, an der die Feinfraktion ausgesiebt wird. Eine entsprechende Vorrichtung und ein entsprechendes Verfahren sind beispielsweise der internationalen Patentanmeldung WO 2005/049656 A2 zu entnehmen.

Nachteilig dabei ist, dass das Mahlgut erwärmt werden muss, um siebbar zu sein und dass der erreichbare Trennschnitt nach unten hin begrenzt ist, da sich bei feineren Maschenweiten das Siebdeck zubaut. Bei Änderungen der gewünschten Endfeinheit muss zudem das komplette Siebdeck ausgetauscht werden.

Zum Abtrennen eines Feingutanteils aus einem heterogenen Gemisch unterschiedlicher Korngröße sind ferner sogenannte Windsichter bekannt. Beispiele dafür finden sich in der deutschen Patentschrift DE 330 30 78 C1, sowie der deutschen Patentanmeldung DE 10 2005 001 542 A. Windsichter haben ein oder mehrere oberhalb eines Sichterraums angeordnete Sichterräder, wobei die Teilchen des zu sichtenden Guts durch einen nach oben gerichteten Luftstrom im Sichterraum mitgenommen, oder, falls das Teilchen zu schwer ist, nicht mitgenommen werden. Von den leichteren Teilchen, die das Sichterrad erreichen, können nur diejenigen Teilchen das Sichterrad passieren, die kleiner als die durch das Sichterrad definierte Kornobergrenze sind. Die anderen Teilchen fallen zurück.

Aus dem nicht kryogenen Anwendungsbereich sind auch schon Mühlen-Sichterkombinationen bekannt. Dabei wird mit großen Mengen Druckluft das Mahlgut durch die Mühle zum Sichter geblasen, was deren Einsatz für die kryogene Mahlung, aufgrund der Temperaturregelung der Mühle und der damit verbundenen Druckschwankungen im aus der Mühle strömende Gas/Teilchen-Strom und weil dabei nicht einfach beliebige Mengen relativ warmer Druckluft eingeblasen werden kann, als ungeeignet erscheinen lässt.

Ein Beispiel einer solchen Sichtermühle ist der europäischen Patentanmeldung EP 0 118 782 A2 zu entnehmen, welche eine dem Windsichter vorgeschaltete Fingerscheiben-Hammermühle zeigt, durch die das Aufgabegut per Druckluft nach oben durch die Mühle hindurch in den Sichterraum des Windsichters geblasen wird. Eine Sichtermühle mit einer Wirbelstrommühle und einem vertikal darüber angeordneten Sichterrad zeigen die deutschen Gebrauchsmusterschriften DE 910 96 08 U1 und DE 901 22 38 U1, wobei das Mahlgut auch hier mittels viel zusätzlich eingeblasener Luft zum Sichterrad befördert wird.

Ausgehend von bekannten Kryogenmahlvorrichtungen und -verfahren ist es Aufgabe der vorliegenden Erfindung, diese im Hinblick auf einen geringeren Energieeinsatz und einer größeren, erreichbaren Feinheit des erzeugten Feinguts durch den Einsatz von Windsichtern weiter zu verbessern.

Die Aufgabe wird hinsichtlich der Kryogenmahlvorrichtung mit den Merkmalen des Anspruchs 1 gelöst, hinsichtlich des Kryogenmahlverfahrens mit den Merkmalen des Anspruchs 15.

Bei der erfindungsgemäßen Kryogenmahlvorrichtung weist die zur Abscheidung des Feinguts aus einem die Mühle verlassenden, das Tieftemperaturgas und das vermahlene Mahl- bzw. Aufgabegut enthaltenden Mühlenausgangsvolumenstrom an die Mühle angeschlossene Abscheideeinrichtung einen Windsichter auf, um eine Kornobergrenze größenmäßig unterscheidende Mahlgutteilchen aus einem am Sichter ankommenden Sichtereingangsvolumenstrom abzuscheiden. Derartige Windsichter benötigen jedoch einen relativ gleichmäßigen Luft/Gas-Eingangsvolumenstrom. Da der die Mühle verlassende Mühlenausgangsvolumenstrom aber durch den kryogenen Mühlenbetrieb insbesondere durch die Temperaturregelung den dadurch hervorgerufenen Schwankungen in Druck, Dichte und Strömungsgeschwindigkeit unterworfen ist, und der Windsichter unter solchen schwankenden Bedingungen nicht oder nur schlecht arbeiten kann, weist die Abscheideeinrichtung ferner eine der Mühle und dem Windsichter zwischengeschaltete Entnahmeeinrichtung auf, an der das gemahlene Mahlgut dem Mühlenausgangsvolumenstrom entnommen wird, sowie eine Leiteinrichtung, um das entnommene Mahlgut in den Sichtereingangsvolumenstrom einzuspeisen und überschüssiges Mühlenausgangsgas aus dem Mühlenausgangsvolumenstrom in die Umgebung abzuführen und/oder, falls gewünscht, zur Mühleneingangsseite rückzuführen und dadurch wiederzuverwenden.

Entsprechend umfasst beim erfindungsgemäßen Kryogenmahlverfahren der Verfahrensschritt des Abscheidens des Feinguts aus dem Mühlenausgangsvolumenstroms mehrere Teilschritte, nämlich das Abführen von überschüssigem Mahlgas aus dem Mühlenausgangsvolumenstrom, und Entnahme des gemahlenen Mahlguts daraus, und Einspeisen des Mahlguts in einen Sichtereingangsvolumenstrom, sowie das Windsichten des Sichtereingangsvolumenstroms, um daraus einen Sichterausgangsvolumenstrom mit denjenigen Mahlgutteilchen abzuscheiden, die eine vorgegebene bzw. vorgebbare Kornobergrenze größenmäßig unterschreiten und damit das Feingut bilden.

Die kritischen Schwankungen im Mühlenausgangsvolumenstrom können sich dabei beispielsweise dadurch einstellen, dass die Mühle, die zum kryogenen Mahlen verwendet wird, bevorzugt eine Wirbelstrommühle, eine Temperaturregelung aufweist, welche die pro Zeiteinheit aufgenommene Menge an Tieftemperaturmedium variabel regelt, um dadurch eine Temperatur bei der Kaltmahlung unter einem gewünschten Sollwert zu halten, z.B. unter -40°C bis -70°C. Steigt die Temperatur in der Mühle also an, so wird mehr Tieftemperaturmedium zugeführt, so dass es potentiell zu zeitlichen Schwankungen im Mühlenausgangsvolumenstrom kommen kann. Durch die Veränderung der Kältemediummenge bedingt durch die Temperaturregelung der Mühle, und dadurch dass das flüssige Kältemedium verdampft, wird zugleich eine Veränderung des Gasvolumenstromes bedingt. Für die kryogene Mahlung ist es also vorteilhaft, wenn die Mühle eine Mühlentemperaturregeleinrichtung aufweist, welche die pro Zeiteinheit aus einer Tieftemperaturgasquelle der Mühle direkt über eine Tieftemperaturgaseinspeiseleitung und/oder über die Tieftemperaturversprödungseinrichtung zugeführte Menge Tieftemperaturgas variabel regelt, um eine Temperatur bei der Kaltmahlung unter einem gewünschten Temperatursollwert zu halten.

Erfindungsgemäß sind die Mühle und der Windsichter daher strömungsmäßig voneinander vollständig getrennte Systeme, oder bevorzugt mit einer kontrollierbaren Leiteinrichtung miteinander verbunden, um lediglich einen gewünschten Speisegasanteil aus dem Mühleneingangsvolumenstrom in den Sichtereingangsvolumenstrom einzuspeisen. D.h. die gemahlenen Teilchen gelangen in den Sichterkreislauf bzw. in den Sichtereingangsvolumenstrom, ohne dass dieser durch die zeitlichen Schwankungen im Mühlenausgangsvolumenstrom negativ beeinflusst wird.

Die Vorteile der verbindenden Leiteinrichtung ergeben sich daraus, dass es wünschenswert ist, wenn auch im Windsichter eine kryogene oder gegenüber der Umgebung (ca. 20°C) jedenfalls kältere, vorzugsweise kältere als 0°C, und auch inertere Athmosphäre herrscht. Dadurch lässt sich verhindern, dass das Sichterrad verklebt, im Hinblick auf den Brandschutz existierende Anforderungen erfüllen und allgemein bessere Sichtergebnisse erzielen.

Da kryogene Kühlgase wie z.B. Stickstoff, die zwar die Anforderungen an die Temperatur erfüllen und auch die gewünschten, inerten Eigenschaften aufweisen, teuer sind, wird der Sichterkreis vorteilhaft mit einem Speisegasanteil aus dem Mühlenausgangsvolumenstrom befüllt, oder, falls kein Gaskreislauf am Sichter vorhanden sein sollte, der Sichtereingangsvolumenstrom fortwährend damit gespeist. Anschließend wird vorteilhaft die gewünschte Temperatur bzw. die gewünschte Inertheit der Athmosphäre im Windsichter (der gewünschten Sauerstoffmenge im Vergleich zur Umgebungsluft) durch weiteres Einspeisen dieses Speisegasanteils des Mühlengasausgangsvolumenstroms aufrechterhalten, wobei hierfür dann nur noch relativ wenig Speisegas nötig ist, wenn eine von der Sichterausgangsseite zur Sichtereingangsseite zurückführende Kreisleitung vorgesehen ist und der Sichterkreis vorab mit dem aus dem Mahlgas gewonnenen Speisegasanteil befüllt wurde. Der für diese Zwecke überschüssige Gasanteil des Mühlenausgangsvolumenstroms wird vorteilhaft in die Umgebung entlassen, ohne die zeitliche Kontinuität des Sichtereingangsvolumenstroms zu stören.

Vorteilhaft ist es dabei, wenn an einem Sichterradausgang des Windsichters eine Nachabscheideeinrichtung anschließt, um aus dem Sichterausgangsvolumenstrom das Feingut abzuscheiden, wobei die Nachabscheideeinrichtung vorzugsweise einen Nachabscheide-Zyklonabscheider aufweist. Der Sichterkreis kann dann durch die Nachabscheideeinrichtung führen, so dass das Sichtergas - ohne das abgeschiedene Feingut - recycelt werden kann. Vorteilhaft ist dabei in dem Sichterkreis, bzw. in der am Sichterradausgang angeschlossenen Sichterkreisleitung, welche zurück auf die Sichtereingangsseite führt, ein Gebläse angeordnet, um den durch das Sichterrad verursachten Strömungswiderstand zu überwinden.

Weiterhin vorteilhaft ist es, wenn die Sichterkreisleitung einen Abzweig in eine Sichterkreisauslassleitung aufweist, durch die zu warmes und/oder zu stark sauerstoffhaltiges Gas in die Umgebung abgeblasen werden kann, während der Sichterkreis mit dem Speisegasanteil aus dem Mühlenausgangsvolumenstrom gespeist wird.

Um eine Kontamination der Umwelt mit Staub zu vermeiden, ist es dabei vorteilhaft, die Sichterkreisleitung durch einen Luftfilter bzw. eine Luftfilterpatrone zu führen, um dem bereits weitgehend vom Feingut befreiten Sichtergas (Zyklone haben Abscheideraten von bis zu 98%) die restlichen enthaltenen Festkörperteilchen zu entziehen, bevor der überschüssige Sichtergasanteil in die Umgebung abgeblasen wird.

Vorteilhaft ist es ferner, wenn die Leiteinrichtung ein Leitungsnetz umfasst, durch das der Sichtereingangsvolumenstrom mit einem zum Schaffen und/oder Aufrechterhalten eines gewünschten Tieftemperaturgasanteils in einer Athmosphäre im Windsichter nötigen Speisegasanteil des Mühlenausgangsgases und mit dem entnommenen Mahlgut gespeist wird und durch das das überschüssige Mühlenausgangsgas in die Umgebung abgeführt wird.

Vorteilhaft ist es ferner, wenn die Leiteinrichtung bzw. deren Leitungsnetz eine die Entnahmeeinrichtung und den Windsichter verbindende Verbindungsleitung umfasst, um das entnommene Mahlgut und den entnommenen Anteil des Tieftemperaturgases in den Sichtereingangsvolumenstrom einzuspeisen, und einen davon abzweigenden, zu einer Gasüberschussauslassleitung führenden Abzweig, um das überschüssige Gas des Mühlenausgangsvolumenstroms in die Umgebung abzuführen, wobei in der Abzweigleitung insbesondere ein Gebläse angeordnet ist, um den überflüssigen Mahlgasanteil abzusaugen, sowie vorzugsweise ein Luftfilter, bevorzugt stromauf des Gebläses, um die Staubkontamination der Umwelt zu verhindern.

Vorteilhaft ist es ferner, wenn die Leiteinrichtung eine Erfassungseinrichtung zum Erfassen zumindest eines Parameters der im Windsichter herrschenden Athmosphäre, wie z.B. Temperatur und/oder Gehalt an Sauerstoff umfasst, eine Anzahl Gaslenkungsaktoren und eine Steuerung, um die Anzahl Gaslenkungsaktoren im Ansprechen auf die Ausgabe der Erfassungseinrichtung so zu steuern, dass der zum Schaffen und/oder Aufrechterhalten zumindest eines Parameter-Sollwerts der Windsichterathmosphäre nötige Speisegasanteil des Mühlenausgangsgases in den Sichtereingangsvolumenstrom eingespeist und der Rest in die Umgebung abgeführt wird, wobei die Leiteinrichtung vorteilhaft dazu eingerichtet ist, den Sichtereingangsvolumenstrom zeitlich zu glätten, insbesondere auf einen gewünschten, vorzugsweise konstanten Volumenstrom-Sollwert einzustellen.

Das an der Tieftemperaturversprödungseinrichtung flüssig zugeführte Tieftemperaturgas, welches in die Tieftemperaturversprödungseinrichtung angeschlossene Mühle gelangt und die Mühle als Gasanteil des Mühlenausgangsvolumenstrom immer noch kalt, im negativen, zweistelligen Grad-Celsius-Bereich bzw. deutlich kälter als die Umgebungstemperatur wieder verlässt, gelangt somit zumindest anteilig als Speisegasanteil in den Sichtereingangsvolumenstrom des Windsichters. Während des Sichtvorgangs bleibt somit das gesamte Sichtgut bzw. das im Sichtereingangsvolumenstrom enthaltene Mahlgut kalt bzw. deutlich kälter als die Umgebung. Bei somit ausreichend hoher Zufuhr von Tieftemperaturgas im kryogenen Temperaturbereich weit unter 0° C verklebt es daher nicht und lässt sich dadurch leicht auflösen und separieren. Ein bei bisherigen Siebmaschinen problematisches Zubauen von Siebmaschen kann damit auch bei höchsten Feinheiten (z. B. unter 100 Micron) des zu erzeugenden Feinguts vermieden werden, weil aufgrund der Kaltsichtung keine Reagglomeration des Mahlguts im Mühlenausgangsvolumenstrom bzw. Sichtereingangsvolumenstrom stattfindet. Kondensation von athmosphärischer Luftfeuchte wird durch den geschlossenen Kreislauf ausgeschlossen.

Mit der vorteilhaften Kryogenmahlvorrichtung bzw. dem vorteilhaften Kryogenmahlverfahren werden somit beispielsweise aus als Frischgut/Grobgut aufgegebenem Gummigranulat Gummimehle herstellbar, die eine Feinheit von unter 100 Micron aufweisen, wohingegen bei herkömmlichen Anlagen zur kryogenen Gummimahlung Kornobergrenzen von 400 Micron des Feinguts erzielbar waren. Wird der Tieftemperaturversprödungseinrichtung als Tieftemperaturgas ferner ein flüssiges Inertgas, insbesondere flüssiger Stickstoff zugesetzt, welches dann zu wesentlichen Teilen die Kaltgasathmosphäre in der Mühle, aber auch im Windsichter bildet, dann befindet sich die gesamte Anlage während der Produktion des Feinguts beispielsweise des Gummimehls unter Inertgasbedingungen, so dass ein Brand oder eine Explosionsgefahr dadurch ausgeschlossen ist.

Vorteilhaft ist die Leiteinrichtung neben der Steuerung der Temperatur und des Inertgasanteils im Sichtereingangsvolumenstrom auch dazu eingerichtet, den Sichtereingangsvolumenstrom auf den gewünschten, zeitlich geglätteten, vorzugsweise konstanten Volumenstrom-Sollwert einzustellen, unabhängig vom zeitlich schwankenden Mühlenausgangsvolumenstrom, da dieser verschieden zum Sichtereingangsvolumenstrom ist, um die vorstehend genannten, vorteilhaften Effekte wie u.a. ein gleichbleibendes Feingut-Endprodukt zu erbringen.

Dazu kann die Leiteinrichtung eine aktive Regelung des Sichtereingangsvolumenstrom aufweisen. Genauso können jedoch passive Bauelemente vorgesehen sein, oder eine Kombination aus beiden.

So wäre es beispielsweise denkbar, dass die Leiteinrichtung in der die Mühle und den Windsichter verbindenden Verbindungsleitung eine feste oder geregelte Drossel aufweist, also beispielsweise eine Durchmesserverengung oder ein geregeltes Proportionalventil, welches einen pulsierend ankommenden Mühlenausgangsvolumenstrom im Moment eines hohen Ausstoßes der Mühle aufstaut und zum Gasüberschussauslass drängt und diesen bei einem geringen momentanen Austoß der Mühle und/oder bei Bedarf auf der Sichterseite durchlässt.

Das in dem zum Gasüberschussauslass führenden Leitungszweig angeordnete Gebläse kann im Ansprechen auf eine Regelung des Sichtereingangsvolumenstroms und/oder dessen Temperatur bzw. Sauerstoffgehalt mit variabler Leistung betrieben werden, ebenso das Gebläse vor der Sichterkreisauslassleitung, um Spitzen des Mühlenausgangsvolumenstroms auszublasen.

Gemäß einer bevorzugten Weiterbildung der aktiven Steuerung bzw. Regelung der Leiteinrichtung weist deren Anzahl Gasleitungsaktoren jedoch jeweils eine gesteuerte Drosselklappe oder ein Ventil in der Gasüberschussauslassleitung und der Sichterkreisauslassleitung auf.
Ist das Sichtergas zu warm oder zu wenig inert, kann der Öffnungsgrad der beiden Drosselklappen so eingestellt werden, dass sich der in den Sichterkreis eingespeiste Speisegasanteil aus dem Mühlenausgangsvolumenstrom vergrößert. Stimmen die Parameter dagegen, dann die Drossel im Sichterauslass geschlossen und die Drossel im Mühlenüberschussauslass vollständig geöffnet werden.

Vorteilhaft ist es dabei, wenn die Mahlgutteilchen-Entnahmeeinrichtung zum Trennen von Gas und gemahlenem Mahlgut als Zyklonabscheider ausgebildet ist.

An Zyklonabscheidern können ca. 98 % der Festkörperfracht aus dem Gasstrom entnommen werden. D.h. dass ein schon stark vorgereinigter Gasstrom zum Teilstromablass bzw. zu dem diesem vorgeschalteten Luftfilter oder zur Drossel bzw. zur Engstelle in der Leitung gelangt, so dass an der Engstelle keine oder nur wenige Teilchen ausgefällt werden, und zudem keine oder nur wenige Teilchen mit dem in die Umgebung abgegebenen Teilvolumenstrom in die Umgebung gelangen, oder an einem vorgeschalteten Luftfilter ausgefiltert werden müssen.

Der Gasaustritt der Mahlgutteilchen-Entnahmeeinrichtung mündet dabei vorteilhaft stromauf des Abzweigs in die Gasüberschussauslassleitung in die Verbindungsleitung zwischen Mühle und Sichter, wohingegen der Mahlgutteilchenaustrag der Mahlgutteilchen-Entnahmeeinrichtung vorteilhaft stromab des Abzweigs in die Gasüberschussauslassleitung in die die Mühle und den Windsichter verbindende Verbindungsleitung einmündet, wobei der Einlass der Entnahmeeinrichtung an den Auslass der Mühle angeschlossen ist.

Ein weiterer Vorteil dieser Anordnung ist es, dass die entnommenen Mahlgutteilchen weder durch lange Leitungszweige, noch durch Gebläse oder dergleichen wandern müssen und daher kalt bleiben, bevor sie dem Windsichter zugeführt werden, was die Sichtergebnisse wesentlich verbessert.

Besonders bevorzugt kann der Transportgasaustritt des Zyklonabscheiders bzw. der Gasaustritt der Mahlgutteilchen-Entnahmeeinrichtung auch an eine Rückführleitung des Leitungsnetzes angeschlossen sein, die stromauf der Mühle in den Mühlenzufuhrstrang einmündet, vorzugsweise zwischen der Tieftemperaturversprödungseinrichtung und der Mühle. Auch in der Rückführleitung kann eine gesteuerte bzw. geregelte Drossel angeordnet sein.

Die Mühle kann dann bei Bedarf einen noch relativ kalten Gasrückstrom ansaugen. D.h. dass wenn der Saugdruck am Eingang der Mühle aufgrund einer steigenden Temperatur und dadurch hochgeregelten Ansaugleistung der Mühle steigt, wohingegen der Saugdruck vom Windsichter her gleich bleibt, kann ein Teil der Gasmenge am Transportgasaustritt zurück zur Eingangsseite der Mühle gesaugt werden. Dadurch wird der in diesem Moment überschüssige Anteil an Transportgas des Mühlenausgangsvolumenstroms entnommen und, anstatt in die Umgebung abgeblasen zu werden, auf der Eingangsseite der Mühle genutzt, was zu einem sparsamen Umgang mit dem relativ teuren Tieftemperaturgas beiträgt.

Weiterhin vorteilhaft weist auch der Windsichter eine Rückführung auf die Eingangsseite der Mühle auf. Dazu hat der Windsichter einen an eine stromauf der Mühle - aufgrund der zwar weiterhin gegenüber der Umgebung kalten, aber mittlerweile doch gegenüber der Temperatur der Tieftemperaturversprödungseinrichtung relativ hohen Teilchentemperatur, vorzugsweise stromauf der Tieftemperaturversprödungseinrichtung - einmündenden Rückführleitung angeschlossenen Grobfraktionsaustrag, um der Mühle die am Windsichter aus den zu sichtenden Mahlgutteilchen ausgefällte Grobfraktion zuzuführen. Das am Grobfraktionsaustrag abgetrennte Grobgut kann dann immer noch relativ kalt direkt auf die Mühle oder vor die Tieftemperaturversprödungseinrichtung zurückgeführt werden, wodurch ebenfalls eine erhebliche Kostenreduzierung aufgrund der Ersparnis an Tieftemperaturgas und der Nutzung der ausgesonderten Grobgutfraktion erzielt wird.

Vorteilhaft ist es, wenn das Leitungsnetz eine von der Gasüberschussauslassleitung vorzugsweise stromab des Gebläses abzweigende Kreisleitung aufweist, die stromab des Abzweigs der Gasüberschussauslassleitung wieder in die Verbindungsleitung mündet.

Selbstverständlich können in den verschiedenen Leitungszweigen geeignete Ventile vorgesehen sein, um diese beispielsweise im Ansprechen auf eine Regelung der Volumenstromumformvorrichtung zu öffnen oder zu schließen. Insbesondere ist es vorteilhaft, wenn die Anzahl Gaslenkungsaktoren eine Drosselklappe in der Kreisleitung und/oder in einem stromab des Abzweigs zur Sichterkreisauslassleitung gelegenen Kreisleitungsabschnitt der Sichterkreisleitung aufweist und/oder dass die Anzahl Gaslenkungsaktoren eine Drosselklappe in der Verbindungsleitung stromauf und/oder stromab des Abzweigs der Gasüberschussauslassleitung aufweist.

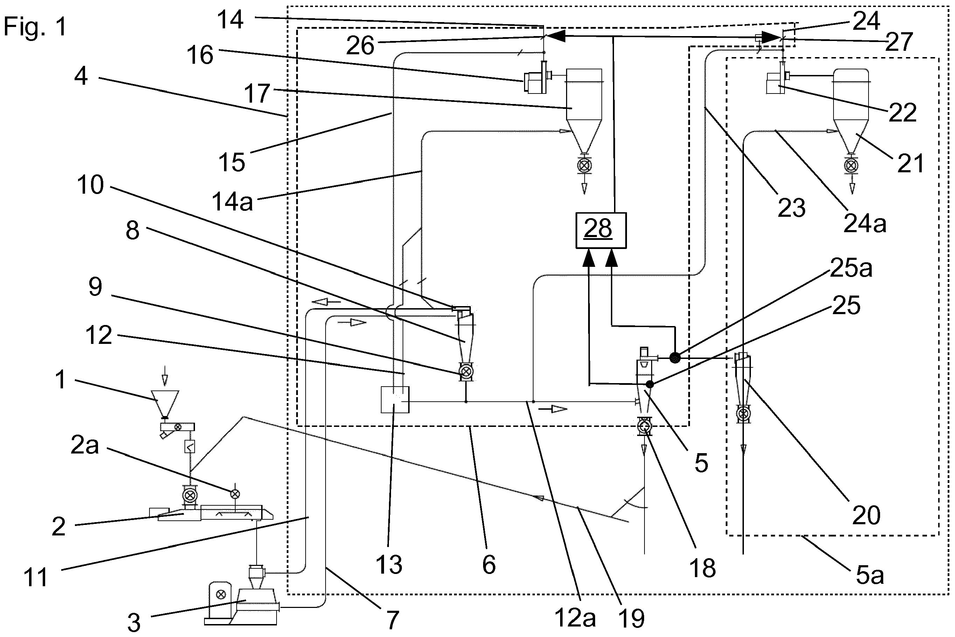

Nachfolgend wird die Erfindung anhand einer in der Figur 1 dargestellten Prinzipskizze einer Ausführungsform der Erfindung näher erläutert.

Die in Figur 1 gezeigte Kryogenmahlvorrichtung zur Durchführung eines Kryogenmahlverfahrens, welches sich insbesondere zur Erzeugung von Gummimehl aus einem Gummigranulat mit Gummigranulatteilchendurchmessern von 0-6 mm eignet, weist eine mit 1 bezeichnete Materialaufgabe auf, an der das Gummigranulat oder ein anderes, schwer mahlbares Mahlgut aufgegeben werden kann. Von der Materialaufgabe 1 gelangt das Mahlgut zu einer vorteilhaft als Kühlschnecke ausgebildeten Tieftemperaturversprödungseinrichtung 2 , an der es beispielsweise über eine Zellenradschleuse aufgetragen wird.

Die als Schneckenförderer bzw. Kühlschnecke ausgebildete Tieftemperaturzersprödungseinrichtung 2 weist dabei neben dem Eingang für das zu versprödende Grobgut einen Anschluss 2a auf, an den ein Flüssiggasbehälter angeschlossen ist, also beispielsweise ein mit flüssigem Stickstoff gefüllter Druckbehälter. Der Flüssigstickstoff oder ein anderes, flüssig vorgehaltenes Inertgas wird dann über den Anschluss 2a in den beispielsweise rohrförmigen Innenraum des vorzugsweise wärmeisolierten Schneckenförderers 2 eingespritzt, durch den sich die Förderschnecke hindurch erstreckt, welche das am Eingang eingebrachte Grobgut durch den vom Isolierrohr umschlossenen Innenraum hindurch zu einem Ausgang am anderen Ende des Rohrs hin fördert, wobei das Flüssiggas für eine Innentemperatur weit im negativen °C-Bereich sorgt und die aufgegebenen Mahlgutteilchen unter zumindest teilweiser Verdampfung kühlt und versprödet. So hat beispielsweise Stickstoff einen Siedepunkt von -196°C bei in der Kühlschnecke herrschendem Normaldruck.

Vom Ausgang des Schneckenförderers 2 gelangt das versprödete Grobgut zusammen mit dem eingedüsten Flüssiggas, welches nun zumindest in Teilen verdampft ist, aber immer noch eine Temperatur im zumindest zweistellig negativen °C-Bereich aufweist, zum Eingang bzw. zur Materialaufgabe einer vorzugsweise als Wirbelstrommühle ausgebildeten Mühle 3. Im Ansprechen auf eine Ausgabe eines Temperatursensors wird dabei ein Ventil in einer Zusatzgasleitung gesteuert, welche die Mühle 2 und den Flüssiggasbehälter optional verbindet.

Die Wirbelstrommühle 3 weist einen Rotor mit senkrecht stehender Drehachse auf, der eine Mehrzahl von Prallscheiben trägt, welche außenumfangsseitig von einer Mahlbahn umgeben werden, um einen Mahlspalt zwischen Rotor und die Mahlbahn tragenden Stator auszubilden. Der Mahlspalt verläuft dabei vorzugsweise konisch nach unten, so dass seine Breite über eine Höhenverstellung des Rotors einstellbar ist. Das Grobgut muss dabei auf seinem Weg vom Mühleneingang zu einem Mühlenausgang den Mahlspalt passieren und wird dabei zwischen den Prall-Scheiben am Rotor und der Mahlbahn am Stator hin- und hergeschleudert und dadurch vermahlen.

Beim Mahlen herrscht in der Mühle 3 nach wie vor eine tiefe Temperatur im zumindest zweistelligen, negativen °C-Bereich, da die Gasathmosphäre in der Mühle von dem direkt über die Zusatzgasleitung oder über die Tieftemperaturversprödungseinrichtung 2 zugesetzten Tieftemperaturgas geprägt wird und zumindest weitestgehend daraus besteht.

Das Mühlengehäuse ist dabei ferner vorzugsweise wärmeisoliert. Die Temperaturregelung kann dabei so ausgebildet sein, dass sie je nach dem, ob die erfasste Temperatur in der Mühle unterhalb eines Sollwerts von beispielsweise -60° oder -70°C liegt, mehr oder weniger Gas in die Mühle 3 lässt.

Die Temperaturregelung der Mühle 3 bewirkt dabei häufig eine an- und abschwellende Zufuhr von Kältemedium und damit einen sich verändernden Mühlenausgangsvolumenstrom, in dem das zu Feinmehl vermahlene Mahlgut und das nun zwar im Zuge des Mahlvorgangs etwas erwärmte, aber immer noch weit im zweistelligen, negativen °C-Bereich befindliche Tieftemperaturgas aus der Gasathmosphäre im Mühleninnenraum enthalten ist.

Um die im Mühlenausgangsvolumenstrom enthaltenen Mahlgutteilchen, die die gewünschte Feinheit aufweisen, deren Durchmesser also unter einer gewünschten Kornobergrenze liegt, aus dem Mühlenausgangsvolumenstrom abzuscheiden ist, eine insgesamt mit 4 bezeichnete Abscheideeinrichtung vorgesehen, die über eine am Mühlenausgang angeschlossene Mühlenausgangsleitung 7 mit der Mühle verbunden ist. Die Leitung 7 wie auch alle weiteren Leitungen der Anlage sind vorzugsweise wärmeisoliert.

Der tatsächliche Trennschnitt, also das Trennen der Feingutfraktion unterhalb einer vorgegebenen Korngrenze von einer Grobgutfraktion erfolgt dabei in einem Windsichter 5, dessen Sichterrad die Kornobergrenze definiert. Der Mühlenausgangsvolumenstrom kann dabei dem Windsichter 5 aber nicht zugeführt werden, weil er dafür aufgrund der von der Temperaturregelung der Mühle 3 hervorgerufenen Pulsationen ungeeignet ist. Denn der Windsichter 5 benötigt einen zumindest relativ konstanten Sichtereingangsvolumenstrom, der durch sein mit konstanter Drehzahl drehendes Sichterrad gelangt. Dem Mühlenausgang und dem Sichtereingang sind daher eine Entnahmeeinrichtung 8 und eine insgesamt mit 6 bezeichnete Leiteinrichtung zwischengeschaltet, die dem Mühlenausgangsvolumenstrom einen für den Windsichter 5 geeigneten, zeitlich geglätteten Speisegasanteil und das zu sichtende, gemahlene Mahlgut entnehmen und in einen Sichtereingansvolumenstrom einspeisen, wohingegen überschüssiges Mahlgas in die Umgebung abgeführt wird. Die Leiteinrichtung 6 umfasst dabei verschiedenste Leitungen, Sensoren, Aktoren und eine Steuerung 12, 12a, 14, 14a, 15, 25, 25a, 26, 27, 28, auf die später eingegangen wird, aber nicht den als Mahlgutteilchen-Entnahmeeinrichtung 8 dienenden Zyklonabscheider.

Im Sichterraum des Windsichters 5 steigen die eingebrachten Mahlgutteilchen, die vom Sichterrad angesaugt werden, auf, wohingegen Mahlgutteilchen, die zu schwer sind, nach unten sinken und dort zu einem mit 18 bezeichneten Grobgutaustrag gelangen, an dem die Grobgutfraktion aus dem Windsichter 5 ausgetragen wird. Die aufgestiegenen Mahlgutteilchen werden dann am oberhalb des Sichterraums befindlichen Sichterrad entweder abgewiesen und fallen zurück in den Sichterraum oder gelangen durch das Sichterrad hindurch zum Sichterausgang und zusammen mit dem durch das Sichterrad hindurch gesaugten Transportgas in eine insgesamt mit 5a bezeichnete Nachabscheideeinrichtung, an der die Mahlgutteilchen der Feingutfraktion aus dem Sichterausgangsvolumenstrom entnommen werden und das im Sichterausgangsvolumenstrom enthaltene Transportgas gereinigt und in die Umgebung abgeführt wird.

Vom Grobfraktionsaustrag 18 des Windsichters 5 führt eine Rückführleitung 19 zurück zur Eingangsseite der Mühle und mündet dort in die die Grobgutaufgabe 1 mit der Tieftemperaturversprödungseinrichtung 2 verbindende Fallleitung. Das am Sichter 5 ausgesichtete Grobgut wird somit erneut dem Kryogenmahlprozess zugeführt. Dabei hat das vom Sichter 5 rückgeführte Grobgut immer noch eine Temperatur im zweistelligen °C-Bereich unter Null und muss daher nicht mehr so stark gekühlt werden, wie das neu aufgegebene Mahlgut, so dass es nicht nur zu einer Verwendung des rückgeführten Grobguts allgemein kommt, sondern auch noch zu einer Einsparung an Flüssiggas und somit insgesamt zu einer verbesserten Ausbeute an Feingut bei geringerem Energieeinsatz.

Der von der Mühle 3 ausgestoßene Mühlenausgangsvolumenstrom gelangt dabei durch die Leitung 7 zunächst in die Entnahmeeinrichtung 8, vorteilhaft also in einen Zyklonabscheider 8, in dessen Eingang die Leitung 7 mündet. Im Zyklonabscheider 8 wird ein großer Teil der Mahlgutteilchenfracht des Mühlenausgangsvolumenstroms, in der Praxis ca. 98 % davon, aus dem Mühlenausgangsvolumenstrom abgeschieden und gelangt in den vorzugsweise mit einer Zellenradschleuse versehenen Produktaustrag 9 des Zyklonabscheiders 8. Der Transportgasstrom mit dem verbliebenen, geringen Anteil an Mahlgutteilchen tritt dagegen an einen Transportgasaustritt 10 aus dem Zyklonabscheider 8 aus.

Der nun mit Mahlgutteilchen nahezu unbefrachtete Transportgasstrom, welcher das in der Tieftemperaturversprödungseinrichtung 2 eingedüste Tieftemperaturgas enthält, und auch zumindest in wesentlichen Teilen daraus besteht, kann nun aufgeteilt werden in einen Speisegasanteil, der dem Sichtereingangsvolumenstrom eingespeist wird, und einen Gasüberschuss, der über eine Gasüberschussleitung 14 in die Umgebung abgeführt wird. Dazu ist ein Transportgasaustritt 10 des Zyklonabscheiders 8 an eine zum Windsichter 5 führende Verbindungsleitung 12, 12a angeschlossen, von der eine zur Gasüberschussauslassleitung 14 führende Abzweigleitung 14a abzweigt.

Der Leitungszweig 12 bildet mit der von der Mühle 3 zum Zyklonabscheider 8 führenden Leitung 7 und dem an den Leitungszweig 12 anschließenden Leitungsabschnitt 12a einen insgesamt die Mühle 3 und den Windsichter 5 verbindenden Leitungszweig 7, 12, 12a, wobei am Verbindungsteil 13 (z.B. ein T-Rohrstück) eine weitere, von der Überschusseinlassleitung 14 kommende Kreisleitung 15 einmündet.

In dem Leitungszweig 14a ist ein Gebläse 16 angeordnet, sowie ein vorgeschalteter Luftfilter 17. Das Gebläse 16 saugt mit einer vorgegebenen konstanten Saugleistung einen Teil des Mahlgases durch den Luftfilter 17, wobei hier die restlichen, im Transportgas des Teilvolumenstroms enthaltenen Mahlgutteilchen abgeschieden werden. Der nun vollständig von Mahlgutteilchen befreite Teilvolumenstrom kann dann an dem Überschussauslass 14 ausgeblasen werden, ohne die Umwelt mit Staub zu belasten und die gesetzlich vorgeschriebene Reststaubmenge zu überschreiten, oder im Fall einer geschlossenen Drosselklappe 26 durch die Kreisleitung 15 in die Verbindungsleitung 12, 12a zurückgeführt werden.

Entsprechende geregelte oder ungeregelte Drosseln können auch, wie jedenfalls durch Querstriche angedeutet, in dem Leitungsabschnitt 12 und der Kreisleitung 15 vorgesehen sein. Stromab der Einmündung 13 der Kreisleitung 15, in den die Mühle 3 und den Windsichter 5 verbindenden Leitungszweig 7, 12, 12a im Leitungsabschnitt 12a, der zum Windsichter 5 führt, mündet ferner ein vom Produktaustrag 9 des Zyklonabscheiders 8 kommendes Fallrohr ein, über welches der Sichtereingangsvolumenstrom mit dem Mahlgut befrachtet wird.

Ferner schließt am Transportgasaustritt 10 des Zyklonabscheiders 8 auch noch eine von dort zum Mühleneingang zurückführende Rückführleitung 11 an, welche zwischen der Tieftemperaturversprödungseinrichtung 2 und der Mühle 3 an der oberseitigen Produktaufgabe der Mühle 3 einmündet.

Neben dem als mehrfach verzweigter Kreis 12, 12a, 14a, 15 mit Kreisauslass 14 gestaltetem Leitungsnetz 12, 12a, 14a, 15 zwischen der Entnahmeeinrichtung 8 und dem Windsichter 5 weist die gezeigte Kryogenmahlvorrichtung auch sichterseitig eine ähnliche Kreisleitungsanordnung mit gesteuertem Auslass auf:
Vom Sichterradausgang des Windsichters 5 führt eine Kreisleitung 24a, 23 durch einen Nachabscheide-Zyklonabscheider 20, einen Luftfilter 21 und ein Gebläse 22 hindurch zurück auf die Sichtereinlassseite, nämlich in die Verbindungsleitung 12, 12a. Stromab des Gebläses zweigt eine Sichterauslassleitung 24 ab, die in die Umgebung führt und in der eine Drosselklappe 27 angeordnet ist.

Die Drosselklappe 26 im Gasüberschussauslass 14 und die Drosselklappe 27 im Sichterauslass 24 werden dabei über eine Steuerung 28 eingestellt, und zwar im Ansprechen auf die Ausgabe einer Erfassungseinrichtung 25, 25a, welche wiederum durch einen O₂-Sensor 25a stromab des Sichterradauslasses und einen Temperatursensor 25 im Inneren des Windsichters 5 gebildet wird.

Je nach dem, ob eine zu hohe Temperatur bzw. ein zu hoher Sauerstoffgehalt gemeldet werden oder nicht, öffnet die Steuerung den Sichterauslass 24 und schließt den Gasüberschussauslass 14, so dass kaltes Mahlgas in den Sichterkreislauf nachströmen kann, oder schließt den Sichterauslass 24 und öffnet den Gasüberschussauslass 14, so dass sämtliches Mahlgas in die Umgebung abgeführt wird. Selbstverständlich sind Zwischenstellungen der beiden Drosselklappen 26, 27 möglich. Die weiteren, durch Querstriche angedeuteten Drosselklappen können selbstverständlich ebenfalls über die Steuerung 28 gesteuert oder geregelt werden.

Der von der Mühle 3 unter Druckstößen und Dichteschwankungen ausgestoßenen Mühlenausgangsvolumenstrom wird nach dem Zyklonabscheider 8, was seinen Transportgasanteil betrifft, je nach Stellung der Drosselklappen, auf mehrere alternative Wege aufgeteilt: Zunächst kann der Weg über den Leitungsabschnitt 12 und den weiteren Leitungsabschnitt 12a direkt zum Windsichter 5 gewählt werden, weiterhin kann über den zum Gasüberschussauslass 14 führenden Leitungszweig 14a, den Rückleitungszweig 15 und den Leitungszweig 12a der Weg zum Windsichter 5 gewählt werden, andererseits kann überschüssiges Transportgas über den zum Teilstromauslass 14 führenden Leitungszweig 14a und den Teilstromauslass 14 in die Umgebung ausgeblasen werden, oder über die Rückführleitung 11 zur Einlassseite der Mühle 3 gelangen.

Je nach den momentanen Druckverhältnissen, die sich aufgrund des Druckwiderstands des Sichterrads des Windsichters 5, sowie der Saugleistung des Gebläses 16, eines weiteren Gebläses 22, und der Mühle 3 ergeben, aber auch aufgrund der Stellung einer Drosselklappe 26 im Gasüberschussauslass 14 und einer weiteren Drosselklappe 27, wird nun ein größerer Teil des Transportgasvolumenstroms direkt zum Windsichter 5 gesaugt oder, etwa bei einer einsetzenden Beschleunigung der Mühle 3 aufgrund dort steigender Temperatur zur Eingangsseite der Mühle 3 gesaugt, oder vom Gebläse 16 angesaugt und am Teilstromauslass 14 ausgeblasen. Dabei können auch die weiteren, durch Querstriche angedeuteten Drosselventile die jeweiligen Leitungszweige öffnen oder schließen oder zu einem bestimmten Grad öffnen oder schließen.

Die dem Windsichter 5 strömungsmäßig nachgeschaltete Abscheideeinrichtung 5a weist wiederum einen Zyklonabscheider auf, der mit 20 bezeichnet ist. An dem Zyklonabscheider 20 der Nachabscheideeinrichtung 5a wird der nun nur noch mit dem Feingut befrachtete Sichterausgangsvolumenstrom von der weit überwiegenden Mehrheit der Feingutteilchen befreit, die am Produktaustrag des Zyklonabscheiders 20 entnommen werden. Der Restgasstrom wird dann von dem Gebläse 22 durch einen Luftfilter 21 gesaugt und dabei von den Restfeingutpartikeln befreit, um in gereinigter Form durch die Sichterauslassleitung 24 in die Umgebung abgeblasen werden zu können. Abwandlungen und Modifikationen der gezeigten Ausführungsform sind möglich, ohne den durch die Ansprüche definierten Rahmen der Erfindung zu verlassen.

## Patentansprüche

1. Kryogenmahlvorrichtung zur Erzeugung von Feingut, insbesondere Gummimehl, aus einem insbesondere vorzerkleinerten Mahlgut, insbesondere einem Gummigranulat, mit:
einer Materialaufgabe (1) zur Aufgabe des Mahlguts,
einer daran anschließende Tieftemperaturversprödungseinrichtung (2) zur Tieftemperaturversprödung des aufgegebenen Mahlguts mittels Zufuhr von flüssigem Tieftemperaturgas, insbesondere flüssigem Stickstoff,
einer daran anschließende Mühle (3), insbesondere Wirbelstrommühle (3), zur Mahlung des versprödeten Mahlguts in einer das zugeführte Tieftemperaturgas enthaltenden Athmosphäre, und
einer daran anschließende Abscheideeinrichtung (4) zur Abscheidung des Feinguts aus einem die Mühle (3) verlassenden, insbesondere ausgeblasenen, das Tieftemperaturgas und das gemahlene Mahlgut enthaltenden Mühlenausgangsvolumenstrom,
**dadurch gekennzeichnet, dass**
die Abscheideeinrichtung (4) zur Abscheidung eines das Feingut enthaltenden Sichterausgangsvolumenstroms aus einem das gemahlene Mahlgut enthaltenden Sichtereingangsvolumenstrom einen Windsichter (5) umfasst,
eine an die Mühle (3) anschließende Entnahmeeinrichtung (8), um dem Mühlenausgangsvolumenstrom das gemahlene Mahlgut zu entnehmen, und
eine Leiteinrichtung (6), um das entnommene Mahlgut in den Sichtereingangsvolumenstrom einzuspeisen und überschüssiges Mühlenausgangsgas des Mühlenausgangsvolumenstroms abzuführen.

2. Kryogenmahlvorrichtung nach Anspruch 1, **dadurch gekennzeichnet, dass** die Leiteinrichtung (6) ein Leitungsnetz (12, 12a, 14a, 15) umfasst, durch das der Sichtereingangsvolumenstrom mit einem zum Schaffen und/oder Aufrechterhalten eines gewünschten Tieftemperaturgasanteils in einer Athmosphäre im Windsichter (5) nötigen Speisegasanteil des Mühlenausgangsgases und mit dem entnommenen Mahlgut gespeist wird und durch das das überschüssige Mühlenausgangsgas in die Umgebung abgeführt wird.

3. Kryogenmahlvorrichtung nach Anspruch 1 oder 2, **dadurch gekennzeichnet, dass** die Leiteinrichtung (6) eine Erfassungseinrichtung (25) zum Erfassen zumindest eines Parameters der im Windsichter (5) herrschenden Athmosphäre, wie z.B. Temperatur und/oder Gehalt an Sauerstoff umfasst, eine Anzahl Gaslenkungsaktoren (26, 27), und eine Steuerung (28), um die Anzahl Gaslenkungsaktoren (26, 27) im Ansprechen auf die Ausgabe der Erfassungseinrichtung (25) so zu steuern, dass der zum Schaffen und/oder Aufrechterhalten zumindest eines Parameter-Sollwerts der Windsichterathmosphäre (5) nötige Speisegasanteil des Mühlenausgangsgases in den Sichtereingangsvolumenstrom eingespeist und der Rest in die Umgebung abgeführt wird, wobei die Leiteinrichtung (6) vorteilhaft dazu eingerichtet ist, den Sichtereingangsvolumenstrom zeitlich zu glätten, insbesondere auf einen gewünschten, vorzugsweise konstanten Volumenstrom-Sollwert einzustellen.

4. Kryogenmahlvorrichtung nach Anspruch 1, 2 oder 3, **dadurch gekennzeichnet, dass** an einem Sichterradausgang des Windsichters (5) eine Nachabscheideeinrichtung (20, 21, 22) anschließt, um aus einem Sichterausgangsvolumenstrom das Feingut abzuscheiden, wobei die Nachabscheideeinrichtung (20, 21, 22) vorzugsweise einen Nachabscheide-Zyklonabscheider aufweist.

5. Kryogenmahlvorrichtung nach einem der vorhergehenden Ansprüche, **dadurch gekennzeichnet, dass** die Leiteinrichtung (6), insbesondere das Leitungsnetz (12, 12a, 14a, 15) eine die Entnahmeeinrichtung (8) und den Windsichter (5) verbindende Verbindungsleitung (12, 12a) umfasst, um das entnommene Mahlgut und den Speisegasanteil in den Sichtereingangsvolumenstrom einzuspeisen, und eine davon abzweigende Gasüberschussauslassleitung (14), um das überschüssige Mühlenausgangsgas in die Umgebung abzuführen, wobei in der Gasüberschussauslassleitung (14) insbesondere ein Gebläse (16) angeordnet ist, sowie vorzugsweise ein Luftfilter (17), bevorzugt stromauf des Gebläses (16).

6. Kryogenmahlvorrichtung nach einem der vorhergehenden Ansprüche, **dadurch gekennzeichnet, dass** der Windsichter (5) an seinem Sichterradausgang an eine Sichterkreisleitung (24a, 23) angeschlossen ist, welcher wieder zurück auf eine Sichtereingangsseite führt, insbesondere in die Verbindungsleitung (7, 12, 12a) mündet, vorzugsweise stromab der Entnahmeeinrichtung (8), wobei von der Sichterkreisleitung (24a, 23) eine Sichterkreisauslassleitung (24) abzweigt, um überschüssige Anteile des in einem Sichterausgangsvolumenstrom enthaltenen Gases in die Umgebung abzuführen, wobei in einem zur Sichterkreisauslassleitung (24) führenden Kreisleitungsabschnitt (24a) insbesondere ein Gebläse (22) angeordnet ist, sowie vorzugsweise ein Luftfilter (21), bevorzugt stromauf des Gebläses (22).

7. Kryogenmahlvorrichtung nach einem der Ansprüche 5 oder 6, **dadurch gekennzeichnet, dass** die Anzahl Gaslenkungsaktoren (26, 27) eine gesteuerte Drosselklappe (26, 27) in der Gasüberschussauslassleitung (14) und/oder der Sichterkreisauslassleitung (24) aufweist.

8. Kryogenmahlvorrichtung nach einem der vorhergehenden Ansprüche 5 bis 7, **dadurch gekennzeichnet, dass** die Entnahmeeinrichtung (8) zum Trennen von Gas und gemahlenem Mahlgut geeignet ist, und einen an eine vom Mühlenausgang kommende Mühlenauslassleitung (7) angeschlossenen Einlass aufweist, einen in die Verbindungsleitung (12, 12a) stromauf des Abzweigs in die Gasüberschussauslassleitung (14) mündenden Gasaustritt (10), und einen stromab davon in die Verbindungsleitung (12, 12a) mündenden Teilchenaustrag (9).

9. Kryogenmahlvorrichtung nach einem der vorhergehenden Ansprüche, **dadurch gekennzeichnet, dass** die Entnahmeeinrichtung (8) als Zyklonabscheider (8) ausgebildet ist.

10. Kryogenmahlvorrichtung nach einem der Ansprüche 5 bis 9, **dadurch gekennzeichnet, dass** das Leitungsnetz (12, 12a, 14a, 15) eine von der Gasüberschussauslassleitung (14) vorzugsweise stromab des Gebläses (16) abzweigende Kreisleitung (15) aufweist, die stromab des Abzweigs der Gasüberschussauslassleitung (14) wieder in die Verbindungsleitung (12, 12a) mündet.

11. Kryogenmahlvorrichtung nach einem der vorhergehenden Ansprüche 5 bis 10, **dadurch gekennzeichnet, dass** die Anzahl Gaslenkungsaktoren (26, 27) eine Drosselklappe in der Kreisleitung (15) und/oder in einem stromab des Abzweigs zur Sichterkreisauslassleitung (24) gelegenen Kreisleitungsabschnitt (23) der Sichterkreisleitung (24a, 23) aufweist und/oder dass die Anzahl Gaslenkungsaktoren (26, 27) eine Drosselklappe in der Verbindungsleitung (12, 12a) stromauf und/oder stromab des Abzweigs der Gasüberschussauslassleitung (14) aufweist.

12. Kryogenmahlvorrichtung nach einem der vorhergehenden Ansprüche, **dadurch gekennzeichnet, dass** die Mühle (3) eine Mühlentemperaturregeleinrichtung aufweist, welche die pro Zeiteinheit aus einer Tieftemperaturgasquelle der Mühle (3) direkt über eine Tieftemperaturgaseinspeiseleitung und/oder über die Tieftemperaturversprödungseinrichtung (2) zugeführte Menge Tieftemperaturgas variabel regelt, um eine Temperatur bei der Kaltmahlung unter einem gewünschten Temperatursollwert zu halten.

13. Kryogenmahlvorrichtung nach einem der vorhergehenden Ansprüche, **dadurch gekennzeichnet, dass** der Windsichter (5) einen Grobgutaustrag (18) aufweist, welcher an eine stromauf der Mühle (3), vorzugsweise stromauf der Tieftemperaturversprödungseinrichtung (2) einmündende Grobgutrückführleitung (19) angeschlossen ist.

14. Kryogenmahlvorrichtung nach einem der vorhergehenden Ansprüche, **dadurch gekennzeichnet, dass** die Tieftemperaturversprödungseinrichtung (2) als rohrförmiger Schneckenförderer (2) ausgebildet ist, der ausgangsseitig an die Mühle angeschlossen ist und eingangsseitig an die Mahlgutaufgabe (1), sowie ferner einen an eine Flüssiggasquelle angeschlossenen Eingang aufweist.

15. Kryogenmahlverfahren zum Erzeugen von Feingut, insbesondere Gummimehl, aus einem insbesondere vorzerkleinerten Mahlgut, insbesondere Gummigranulat, mit folgenden Schritten:
Aufgeben des Mahlguts,
anschließendes Tieftemperaturverspröden des aufgegebenen Mahlguts mittels Zuführen von flüssigem Tieftemperaturgas, insbesondere flüssigem Stickstoff
anschließendes Mahlen des tieftemperaturversprödeten Grobguts in einer das zugeführte Tieftemperaturgas enthaltenden Athmosphäre,
anschließendes Abscheiden des Feinguts aus einem Volumenstrom, welcher das gemahlene Mahlgut und ein das Tieftemperaturgas enthaltendes Mahlgas umfasst,
**dadurch gekennzeichnet, dass**
das Abscheiden die folgenden Teilschritte umfasst:
Entnehmen des gemahlenen Mahlguts aus dem Volumenstrom,
Abführen von überschüssigem Mahlgas,
Einspeisen des entnommenen Mahlguts in einen Sichtereingangsvolumenstrom eines Windsichters (5), und insbesondere Einspeisen eines zum Schaffen und/oder Aufrechterhalten eines gewünschten Tieftemperaturgasanteils in einer Athmosphäre im Windsichter (5) nötigen Speisegasanteils des Mahlgases,
Windsichten des Sichtereingangsvolumenstroms zur Abscheidung eines das Feingut enthaltenden Sichterausgangsvolumenstroms, insbesondere in einer zumindest einen gewünschten Tieftemperaturgasanteil enthaltenden Athmosphäre im Windsichter (5), wobei das Kryogenmahlverfahren vorzugsweise auf einer Kryogenmahlvorrichtung nach einem der Ansprüche 1 bis 14 durchgeführt wird.

## Claims

1. A cryogenic grinding device for the production of fine particles, in particular rubber powder, from an in particular pre-crushed grinding stock, in particular a rubber granulate, comprising:
a material feed (1) for feeding the grinding stock,
a subsequent low-temperature embrittlement device (2) for low-temperature embrittlement of the grinding stock fed by means of liquid low-temperature gas supply, in particular liquid nitrogen,
a subsequent mill (3), in particular a whirlwind mill (3), for grinding the embrittled grinding stock in an atmosphere containing the low-temperature gas supplied, and
a subsequent separating system (4) for separating the fine particles from a mill outlet volume flow leaving the mill (3), in particular blown out, and containing the low-temperature gas and the ground grinding stock,
**characterized in that**
the separating system (4) comprises an air classifier (5) for separation of a classifier outlet volume flow containing the fine particles from a classifier inlet volume flow containing the ground grinding stock,
an extraction device (8) subsequent to the mill (3) in order to extract the ground grinding stock from the mill outlet volume flow, and
a guiding device (6) in order to feed the extracted grinding stock into the classifier inlet volume flow and to discharge excessive mill outlet gas of the mill outlet volume flow.

2. The cryogenic grinding device according to claim 1, **characterized in that** the guiding device (6) comprises a line network (12, 12a, 14a, 15) through which the classifier inlet volume flow is supplied with a feed gas portion of the mill outlet gas required for creating and/or maintaining a desired low-temperature gas portion in an atmosphere in the air classifier (5) and is supplied with the extracted grinding stock and through which the excessive mill outlet gas is discharged to the environment.

3. The cryogenic grinding device according to claim 1 or 2, **characterized in that** the guiding device (6) comprises a detecting means (25) for detecting at least one parameter of the atmosphere existing in the air classifier (5), such as, for example, temperature and/or content of oxygen, a number of gas steering actuators (26, 27), and a control (28) in order to control the number of gas steering actuators (26, 27) in response to the output of the detecting means (25) in such a manner that the feed gas portion of the mill outlet gas required for creating and/or maintaining at least one parameter set value of the air classifier atmosphere (5) is fed to the classifier inlet volume flow and the remainder is discharged to the environment, wherein the guiding device (6) is advantageously configured to smooth the classifier inlet volume flow in time, in particular to adjust it to a desired, preferably constant, volume flow set value.

4. The cryogenic grinding device according to claim 1, 2 or 3, **characterized in that** on a classifier wheel outlet of the air classifier (5) a subsequent separating system (20, 21, 22) is connected in order to separate the fine particles from a classifier outlet volume flow, wherein the subsequent separating system (20, 21, 22) preferably comprises a subsequent separating cyclone separator.

5. The cryogenic grinding device according to any one of the preceding claims, **characterized in that** the guiding device (6), in particular the line network (12, 12a, 14a,15) comprises a connecting line (12, 12a) connecting the extraction device (8) and the air classifier (5) in order to feed the extracted grinding stock and the feed gas portion into the classifier inlet volume flow, and an excess gas discharge line (14) branching off from it, in order to discharge the excessive mill outlet gas to the environment, wherein in the excess gas discharge line (14) in particular a fan (16) is located as well as preferably an air filter (17), preferably upstream of the fan (16).

6. The cryogenic grinding device according to any one of the preceding claims, **characterized in that** the air classifier (5) on its classifier wheel outlet is connected to a classifier circular line (24a, 23), which leads back again to a classifier inlet side, in particular opens out into the connecting line (7, 12, 12a), preferably downstream of the extraction device (8), wherein a classifier circular outlet line (24) branches off from the classifier circular line (24a, 23) in order to discharge to the environment excessive portions of the gas contained in a classifier outlet volume flow, wherein in a circular line portion (24a) leading to the classifier circular outlet line (24) in particular a fan (22) is located as well as preferably an air filter (21), preferably upstream of the fan (22).

7. The cryogenic grinding device according to any one of claims 5 or 6, **characterized in that** the number of gas steering actuators (26, 27) comprises a controlled throttle valve (26, 27) in the excess gas discharge line (14) and/or in the classifier circular outlet line (24).

8. The cryogenic grinding device according to any one of the preceding claims 5 to 7, **characterized in that** the extraction device (8) is suitable for separating gas and ground grinding stock, and comprises an inlet connected to a mill outlet line (7) coming from the mill outlet, a gas outlet (10) opening out into the connecting line (12, 12a) upstream of the branch in the excess gas discharge line (14), and a particle discharge (9) opening out into the connecting line (12, 12a) downstream of it.

9. The cryogenic grinding device according to any one of the preceding claims, **characterized in that** the extraction device (8) is formed as a cyclone separator (8).

10. The cryogenic grinding device according to any one of claims 5 to 9, **characterized in that** the line network (12, 12a, 14a, 15) comprises a circular line (15) branching off from the excess gas discharge line (14) preferably downstream of the fan (16) which downstream of the branch of the excess gas discharge line (14) opens out again into the connecting line (12, 12a).

11. The cryogenic grinding device according to any one of claims 5 to 10, **characterized in that** the number of gas steering actuators (26, 27) comprises a throttle valve in the circular line (15) and/or in a classifier circular line section (23) of the classifier circular line (24a, 23) located downstream of the branch to the classifier circular outlet line (24), and/ or that the number of gas steering actuators (26, 27) comprises a throttle valve in the connecting line (12, 12a) upstream and/or downstream of the branch of the excess gas discharge line (14).

12. The cryogenic grinding device according to any one of the preceding claims, **characterized in that** the mill (3) comprises a mill temperature control device, which variably controls the quantity of low-temperature gas supplied per unit of time from a low-temperature gas source of the mill (3) directly via a low-temperature gas supply line and/or via the low -temperature embrittlement device (2), in order to maintain a temperature during cold grinding below a desired temperature set value.

13. The cryogenic grinding device according to any one of the preceding claims, **characterized in that** the air classifier (5) comprises a coarse particles' discharge (18), which is connected to a coarse particles' return line (19) opening out upstream of the mill, preferably opening out upstream of the low-temperature embrittlement device (2).

14. The cryogenic grinding device according to any one of the preceding claims, **characterized in that** the low-temperature embrittlement device (2) is configured as a tubular screw conveyor (2), which is connected to the mill on the outlet and to the grinding stock feed (1) on the inlet as well as comprises moreover an inlet connected to a liquid gas source.

15. A cryogenic grinding method for the production of fine particles, in particular rubber powder, from an in particular pre-crushed grinding stock, in particular rubber granulate, with the following steps:
feeding of the grinding stock,
subsequent low-temperature embrittlement of the grinding stock fed by means of liquid low-temperature gas supply, in particular liquid nitrogen
subsequent grinding of the low-temperature embrittled coarse particles in an atmosphere containing the low-temperature gas supplied,
subsequent separating of the fine particles from volume flow comprising the ground grinding stock and a grinding gas containing the low-temperature gas,
**characterized in that**
the separation comprises the following partial steps:
extraction of the ground grinding stock from the volume flow,
discharge of excessive grinding gas,
feeding of the extracted grinding stock into a classifier inlet volume flow of an air classifier (5), and in particular feeding of a feed gas portion of the grinding gas required for creating and/or maintaining a desired low-temperature gas portion in an atmosphere in the air classifier (5),
air classifying of the classifier inlet volume flow for separation of a classifier outlet volume flow containing the fine particles, in particular in an atmosphere in the air classifier (5) containing at least a desired low-temperature gas portion, wherein the cryogenic grinding method is carried out preferably in a cryogenic grinding device according to any one of claims 1 to 14.

## Revendications

1. Dispositif de broyage cryogénique pour la production de matière fine, en particulier de poudre de caoutchouc, à partir d'une matière à broyer en particulier pré-broyée, en particulier de granulés de caoutchouc, comprenant:
un dispositif d'alimentation de matière (1) destiné à amener la matière à broyer,
un dispositif de fragilisation à basse température (2) monté à la suite de ce dernier et destiné à la fragilisation à basse température de la matière à broyer amenée, en amenant du gaz cryogénique liquide, en particulier de l'azote liquide,
un broyeur (3), en particulier un broyeur à tourbillonnement (3), monté à la suite de ce dernier et destiné à broyer la matière à broyer fragilisée dans une atmosphère contenant le gaz cryogénique amené, et
un dispositif de séparation (4) monté à la suite de ce dernier et destiné à séparer la matière fine d'un débit volumique de sortie de broyeur sortant du broyeur (3), en particulier évacué par soufflage et contenant le gaz cryogénique et la matière à broyer broyée,
**caractérisé par le fait que**
ledit dispositif de séparation (4) comprend un séparateur à air (5) pour séparer un débit volumique de sortie de séparateur contenant la matière fine d'un débit volumique d'entrée de séparateur contenant la matière à broyer broyée,
un dispositif de prélèvement (8) monté à la suite du broyeur (3) et destiné à prélever la matière à broyer broyée dans le débit volumique de sortie de broyeur, et
un dispositif de guidage (6) pour introduire la matière broyée dans le débit volumique d'entrée de séparateur et pour faire évacuer du gaz excédentaire de sortie de broyeur du débit volumique de sortie de broyeur.

2. Dispositif de broyage cryogénique selon la revendication 1, **caractérisé par le fait que** le dispositif de guidage (6) comprend un réseau de conduites (12, 12a, 14a, 15) par lequel le débit volumique d'entrée de séparateur est alimenté en une part de gaz d'alimentation du gaz de sortie de broyeur laquelle est nécessaire pour créer et/ou pour maintenir une part de gaz cryogénique souhaitée dans une atmosphère à l'intérieur du séparateur à air (5), et en matière broyée prélevée, et par lequel on fait évacuer dans l'environnement le gaz excédentaire de sortie de broyeur.

3. Dispositif de broyage cryogénique selon la revendication 1 ou 2, **caractérisé par le fait que** le dispositif de guidage (6) comprend un dispositif de détection (25) pour détecter au moins un paramètre de l'atmosphère régnant à l'intérieur du séparateur à air (5), tel que la température et/ou la teneur en oxygène, un nombre d'actionneurs de direction de gaz (26, 27) et une commande (28) pour commander le nombre d'actionneurs de direction de gaz (26, 27) en réponse à la sortie du dispositif de détection (25) de telle sorte que la part de gaz d'alimentation du gaz de sortie de broyeur laquelle est nécessaire pour créer et/ou pour maintenir au moins une valeur de consigne de paramètre de l'atmosphère du séparateur à air (5) est injectée dans le débit volumique d'entrée de séparateur et que l'on fait évacuer le reste dans l'environnement, ledit dispositif de guidage (6) étant adapté avantageusement pour lisser dans le temps le débit volumique d'entrée de séparateur, en particulier pour le régler à une valeur de consigne de débit volumique souhaitée, de préférence constante.

4. Dispositif de broyage cryogénique selon la revendication 1, 2 ou 3, **caractérisé par le fait qu'**un dispositif de séparation ultérieure (20, 21, 22) est monté à la suite d'une sortie de roue de séparateur du séparateur à air (5) pour séparer la matière fine d'un débit volumique de sortie de séparateur, ledit dispositif de séparation ultérieure (20, 21, 22) comprenant de préférence un séparateur à cyclone de séparation ultérieure.

5. Dispositif de broyage cryogénique selon l'une quelconque des revendications précédentes, **caractérisé par le fait que** le dispositif de guidage (6), en particulier le réseau de conduites (12, 12a, 14a, 15) comprend une conduite de connexion (12, 12a) reliant le dispositif de prélèvement (8) et le séparateur à air (5) afin d'introduire la matière broyée prélevée et la part de gaz d'alimentation dans le débit volumique d'entrée de séparateur, ainsi qu'une conduite de sortie de surplus de gaz (14) en dérivée afin de faire évacuer dans l'environnement le gaz excédentaire de sortie de broyeur, dans ladite conduite de sortie de surplus de gaz (14) étant disposé(e) en particulier une soufflante (16) ainsi que, de préférence, un filtre à air (17), de préférence en amont de la soufflante (16).

6. Dispositif de broyage cryogénique selon l'une quelconque des revendications précédentes, **caractérisé par le fait que**, sur sa sortie de roue de séparateur, le séparateur à air (5) est raccordé à une conduite de circuit de séparateur (24a, 23) qui mène à nouveau vers un côté d'entrée de séparateur, en particulier débouche dans la conduite de connexion (7, 12, 12a), de préférence en aval du dispositif de prélèvement (8), une conduite de sortie de circuit de séparateur (24) étant dérivée de la conduite de circuit de séparateur (24a, 23) afin de faire évacuer dans l'environnement des parts excédentaires du gaz contenu dans un débit volumique de sortie de séparateur, dans une section de conduite de circuit (24a) menant vers la conduite de sortie de circuit de séparateur (24) étant disposé(e) en particulier une soufflante (22) ainsi que, de préférence, un filtre à air (21), de préférence en amont de la soufflante (22).

7. Dispositif de broyage cryogénique selon l'une quelconque des revendications 5 ou 6, **caractérisé par le fait que** le nombre d'actionneurs de direction de gaz (26, 27) comprend un clapet d'étranglement (26, 27) commandé dans la conduite de sortie de surplus de gaz (14) et/ou dans la conduite de sortie de circuit de séparateur (24).

8. Dispositif de broyage cryogénique selon l'une quelconque des revendications précédentes 5 à 7, **caractérisé par le fait que** ledit dispositif de prélèvement (8) se prête à la séparation de gaz et de matière à broyer broyée et présente une entrée raccordée à une conduite de sortie de broyeur (7) issue de la sortie de broyeur, une sortie de gaz (10) qui débouche dans la conduite de connexion (12, 12a) en amont du point de dérivation de la conduite de sortie de surplus de gaz (14) ainsi qu'un point de décharge de particules (9) qui débouche, en aval de ceci, dans la conduite de connexion (12, 12a).

9. Dispositif de broyage cryogénique selon l'une quelconque des revendications précédentes, **caractérisé par le fait que** le dispositif de prélèvement (8) est réalisé en tant que séparateur à cyclone (8).

10. Dispositif de broyage cryogénique selon l'une quelconque des revendications 5 à 9, **caractérisé par le fait que** le réseau de conduites (12, 12a, 14a, 15) comprend une conduite de circuit (15) qui est dérivée de la conduite de sortie de surplus de gaz (14), de préférence en aval de la soufflante (16), et qui débouche à nouveau dans la conduite de connexion (12, 12a) en aval du point de dérivation de la conduite de sortie de surplus de gaz (14).

11. Dispositif de broyage cryogénique selon l'une quelconque des revendications précédentes 5 à 10, **caractérisé par le fait que** le nombre d'actionneurs de direction de gaz (26, 27) comprend un clapet d'étranglement dans la conduite de circuit (15) et/ou dans une section de conduite de circuit (23) de la conduite de circuit de séparateur (24a, 23), qui est située en aval du point de dérivation vers la conduite de sortie de circuit de séparateur (24), et/ou que le nombre d'actionneurs de direction de gaz (26, 27) présente un clapet d'étranglement dans la conduite de connexion (12, 12a) en amont et/ou en aval du point de dérivation de la conduite de sortie de surplus de gaz (14).

12. Dispositif de broyage cryogénique selon l'une quelconque des revendications précédentes, **caractérisé par le fait que** le broyeur (3) comprend un dispositif de réglage de température de broyeur qui règle de manière variable la quantité de gaz cryogénique amenée au broyeur (3) par unité de temps, à partir d'une source de gaz cryogénique, directement via une conduite d'injection de gaz cryogénique et/ou par le dispositif de fragilisation à basse température, afin de maintenir une température lors du broyage froid au-dessous d'une valeur de consigne de température souhaitée.

13. Dispositif de broyage cryogénique selon l'une quelconque des revendications précédentes, **caractérisé par le fait que** le séparateur à air (5) présente un point de décharge de particules grosses (18) qui est raccordé à une conduite de retour de particules grosses (19) débouchant en amont du broyeur (3), de préférence en amont du dispositif de fragilisation à basse température (2).

14. Dispositif de broyage cryogénique selon l'une quelconque des revendications précédentes, **caractérisé par le fait que** le dispositif de fragilisation à basse température (2) est réalisé en tant que convoyeur à vis (2) tubulaire qui, côté sortie, est raccordé au broyeur et, côté entrée, au dispositif d'alimentation de matière à broyer (1), et présente en outre une entrée raccordée à une source de gaz liquide.

15. Procédé de broyage cryogénique pour la production de matière fine, en particulier de poudre de caoutchouc, à partir d'une matière à broyer en particulier pré-broyé, en particulier de granulés de caoutchouc, comprenant les étapes suivantes consistant:
à amener la matière à broyer, ensuite
à fragiliser à basse température la matière à broyer amenée, en amenant du gaz cryogénique liquide, en particulier de l'azote liquide, puis
à broyer les particules grosses fragilisées à basse température, dans une atmosphère contenant le gaz cryogénique amené,
à séparer ensuite la matière fine d'un débit volumique qui comprend la matière à broyer broyée et un gaz de broyage contenant le gaz cryogénique,
**caractérisé par le fait que**
la séparation comprend les sous-étapes suivantes consistant:
à prélever, dans le débit volumique, la matière à broyer broyée,
à faire évacuer du gaz de broyage excédentaire,
à introduire la matière broyée prélevée dans un débit volumique d'entrée de séparateur d'un séparateur à air (5), et, en particulier, à introduire une part de gaz d'alimentation du gaz de broyage laquelle est nécessaire pour créer et/ou pour maintenir une part de gaz cryogénique souhaitée dans une atmosphère à l'intérieur du séparateur à air (5),
à séparer à air le débit volumique d'entrée de séparateur pour séparer un débit volumique de sortie de séparateur contenant la matière fine, en particulier dans une atmosphère à l'intérieur du séparateur à air (5) qui contient au moins une part souhaitée de gaz cryogénique, le procédé de broyage cryogénique étant mis en oeuvre de préférence sur un dispositif de broyage cryogénique selon l'une quelconque des revendications 1 à 14.
